# EUROPEAN PATENT APPLICATION

(11) **EP 4 420 778 A1**
(43) Date of publication of application: **28.08.2024**
(21) Application number: 22885863.5
(22) Date of filing: 24.10.2022
(51) Int. Cl.: B01J 23/83

(54) **GRADING SYSTEM AND APPLICATION OF HYDROGENATION CATALYST AND GRADING METHOD OF HYDROGENATION CATALYST**

(30) Priority: 25.10.2021 CN 202111242776
(71) Applicant: China Petroleum & Chemical Corporation, Beijing 100728 (CN); Sinopec Dalian Research Institute of Petroleum and Petrochemicals Co., Ltd., Lushunkou District Dalian, Liaoning 116045 (CN)
(72) Inventor: YANG, Zhanlin, Dalian, Liaoning 116045 (CN); DING, Sijia, Dalian, Liaoning 116045 (CN); LIU, Yi, Dalian, Liaoning 116045 (CN); PENG, Shaozhong, Dalian, Liaoning 116045 (CN); WANG, Huigang, Dalian, Liaoning 116045 (CN); JIANG, Hong, Dalian, Liaoning 116045 (CN); WANG, Jifeng, Dalian, Liaoning 116045 (CN); WANG, Fangzhao, Dalian, Liaoning 116045 (CN); WANG, Ping, Dalian, Liaoning 116045 (CN)
(74) Representative: karo IP
(86) International application number: PCT/CN2022/127053
(87) International publication number: WO 2023/071986

(57) **Abstract**

The present invention relates to the field of oil product hydrogenation, and relates to a grading system and an application of a hydrogenation catalyst and a grading method of the hydrogenation catalyst. The system comprises M hydrogenation catalysts sequentially filled in a material flow direction, wherein M is an integer greater than 2; an R value of an Nth hydrogenation catalyst is not less than an R value of an (N-1)th hydrogenation catalyst, and the R value of at least one Nth hydrogenation catalyst is greater than the R value of the (N-1)th hydrogenation catalyst, wherein N is an integer greater than 2 and not greater than M; the R value is a ratio of molar content of the VIII group metal element in the hydrogenation catalyst characterized by an X-ray photoelectron spectrum to weight content of the VIII group metal element in terms of oxides in the hydrogenation catalyst characterized by an X-ray fluorescence spectrum. According to the grading system of the hydrogenation catalyst provided in the present invention, the hydrogenation catalysts having different surface nickel atom concentrations are used for grading, thereby facilitating improving the overall denitrification effect of the device, and improving the hydrogenation saturation performance of a catalyst system.

## Description

### CROSS-REFERENCE TO RELATED APPLICATIONS

The application claims the benefit of Chinese patent application No. "202111243451.4", filed on October 25, 2021, the content of which is specifically and entirely incorporated herein by reference.

### TECHNICAL FIELD

The present invention relates to the field of oil product hydrogenation, in particular to a grading system of hydrogenation catalyst and application thereof, and grading method of hydrogenation catalyst.

### BACKGROUND ART

In modern oil refining technologies, hydrocracking refers to the hydrogenation processes for converting more than 10% of compounds with large size in raw materials into smaller compounds through the hydrogenation reaction. Hydrocracking has the characteristics such as the strong raw material adaptability, the large production scheme flexibility, and the desirable product quality, and can directly convert the various heavy and inferior feedstocks into high-quality products which are urgently needed by the markets such as the jet f uels, diesel oil, lubricating oil base materials, chemical naphtha and tail oil steam cracking ethylene raw materials and so on The hydrocracking has become one of the most important deep processing processes for heavy oil in the modern oil refining and petrochemical industry, and has been applied in the increasingly extensive fields in China and foreign countries.

The core of hydrocracking technology is the catalysts, including pretreatment catalysts and cracking catalysts, wherein the hydrocracking pretreatment catalyst has the main functions as follows: the raw materials are hydrogenated to remove impurities such as sulfur, nitrogen, oxygen, and heavy metals therein, and the polycyclic aromatics are subjected to hydrogenation saturation, such that the properties of the oil product are improved. Because the nitrides, especially the basic nitrides, in the feedstock oil, can poison the acid center of the cracking catalyst, the hydrodenitrogenation performance is an important indicator of the hydrocracking pretreatment catalyst.

The industrial plant is an adiabatic reactor, the reaction temperature is greatly increased along with the reaction process, the hydrogen partial pressure is slightly reduced, the partial pressures of hydrogen sulfide and ammonia are increased, the nitrogen content in reactants is decreased, and the residual nitrogen-containing compounds are molecules which can hardly perform the denitrogenation, and generally have a multi-side chain structure. The reaction conditions of the upper bed and the lower bed of the catalysts are significantly different. In order to adapt to the different reaction environments, a grading system of catalysts can be developed to improve the service performance and prolong the service life of the catalysts to the maximum extent.

CN112725014A discloses a grading method of hydrotreating catalyst, the method is filled with N catalyst beds, N is an integer not less than 2, and the acid content at 250°C to 500°C of the catalyst filled in the mth catalyst bed is the highest, m is an integer greater than 1 and less than N; the acid content at 250°C to 500°C of the catalyst increases from the first to the mth catalyst bed and the acid content at 250°C to 500°C of the catalyst decreases from the mth to Nth catalyst bed; and the reaction temperature of the catalyst beds is in an increasing trend along the material flow. The method not only can improve the total denitrogenation and desulfurization performance of the hydrotreating reactor, but also can improve the stability of the performance of the catalyst system.

CN109718867A relates to the field of hydrofining catalysts and discloses a hydrofining catalyst system and application thereof, a preparation method of a hydrofining catalyst, and a hydrofining method of distillate oil. The catalyst system includes first and second catalyst beds; wherein the first catalyst contains aluminum oxide, a hydrodesulfurization catalytic active component, and carboxylic acid; the second catalyst contains an inorganic refractory component, a hydrodesulfurization catalytic active component, and carboxylic acid; the second inorganic refractory component contains amorphous silica-alumina and/or molecular sieve and aluminum oxide; both the first and second catalysts have a pore diameter of 4-40 nm and a pore diameter of 100-300 nm, wherein the pore volumes of corresponding diameters respectively account for 60-95% and 0.5-30% of the total pore volume. Both the first and second catalysts have a pore diameter of 100-300 nm, so that the catalyst system has desirable performance and shortened preparation process, and enhances the distillate oil treatment capacity of the catalyst system.

CN106669861A discloses a hydrocracking catalyst grading method and a catalytic diesel oil hydrogenation conversion process. The hydrocracking catalyst grading method comprises the following content: a hydrocracking reactor is divided into 2-8 reaction zones along the material flow direction, each reaction zone is filled with a mixture of a hydrocracking catalyst and a regenerated catalyst at the mass ratio of the hydrocracking catalyst to the regenerated catalyst being 10:1-1:10; and along the material flow direction, the mass ratio of the hydrocracking catalyst to the regenerated catalyst in each reaction zone is gradually reduced. It simultaneously provides a catalytic diesel oil hydrogenation conversion process by the above catalyst grading. By filling the hydrocracking reactor with catalysts having different reaction properties, diesel oil/gasoline fraction hydrogenation selectivity during the conversion process is raised, and the yield of high-octane gasoline products is increased.

### SUMMARY OF THE INVENTION

The invention provides a grading system and of hydrogenation catalyst and application thereof, and a grading method of hydrogenation catalyst. The application of the grading system of hydrogenation catalyst provided by the invention in the oil product hydrogenation process, has the improved total denitrogenation and the aromatics saturation performance.
The first aspect of the invention provides a grading system of hydrogenation catalysts, the system comprises M hydrogenation catalysts sequentially filled in a material flow direction, wherein M is an integer not less than 2;
Wherein an R value of an Nth hydrogenation catalyst is not less than an R value of an (N-1)th hydrogenation catalyst, and the R value of at least one Nth hydrogenation catalyst is greater than the R value of an (N-1)th hydrogenation catalyst, wherein N is an integer not less than 2 and not greater than M;
wherein the R value is a ratio of the molar content of the VIII group metal element in the hydrogenation catalyst characterized by an X-ray photoelectron spectrum to the weight content of the VIII group metal element in terms of oxides in the hydrogenation catalyst characterized by an X-ray fluorescence spectrum.

Preferably, the R value of the Nth hydrogenation catalyst is 1-20% higher, preferably 2-10% higher than the R value of the (N-1)th hydrogenation catalyst.

The second aspect of the present invention provides an application of the grading system of hydrogenation catalyst according to the first aspect in an oil product hydrotreatment, preferably an application in an oil product hydrocracking, more preferably an application in an oil product hydrocracking pre-treatment.

The third aspect of the present invention provides a grading method of the hydrogenation catalyst, the method is carried out in a grading system according to the first aspect.

Preferably, the reaction temperature of the Nth hydrogenation catalyst bed is not lower than the reaction temperature of the 1st hydrogenation catalyst bed.

According to the grading system of the hydrogenation catalyst provided in the present invention, the hydrogenation catalysts having different surface nickel atom concentrations are used for grading, thereby facilitating improving the overall denitrogenation effect of the device, and improving the hydrogenation saturation performance of a catalyst system.

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point value of the various ranges, and the individual point values may be combined with one another to produce one or more new numerical ranges, which should be deemed have been specifically disclosed herein.
The first aspect of the invention provides a grading system of hydrogenation catalysts, the system comprises M hydrogenation catalysts sequentially filled in a material flow direction, wherein M is an integer not less than 2;
Wherein an R value of an Nth hydrogenation catalyst is not less than an R value of an (N-1)th hydrogenation catalyst, and the R value of at least one Nth hydrogenation catalyst is greater than the R value of an (N-1)th hydrogenation catalyst, wherein N is an integer not less than 2 and not greater than M;
Wherein the R value is a ratio of the molar content of the VIII group metal element in the hydrogenation catalyst characterized by an X-ray photoelectron spectrum to the weight content of the VIII group metal element in terms of oxides in the hydrogenation catalyst characterized by an X-ray fluorescence spectrum.

Unless otherwise specified in the invention, the content of the VIII group metal element in the hydrogenation catalyst characterized by an X-ray fluorescence spectrum refers to the molar percentage content of the VIII group metal element in terms of element in the hydrogenation catalyst characterized by an X-ray fluorescence spectrum.

In the present invention, an X-ray photoelectron spectroscopy (XPS) test is performed on the Multilab 2000 type X-ray photoelectron spectrometer manufactured by the Thermo Fisher Scientific Incorporation, wherein the excitation source is MgKα, C1s (284.8ev) is used as an interior label to correct the charging effects.

Unless otherwise specified in the invention, the content of the VIII group metal element in the hydrogenation catalyst characterized by an X-ray fluorescence (XRF) spectrum refers to the weight percentage content of the VIII group metal element in terms of oxides in the hydrogenation catalyst characterized by an X-ray fluorescence spectrum.

In the invention, the characterization of the X-ray fluorescence (XRF) spectrum is performed by using a ZSX100e wavelength dispersion type X-ray fluorescence spectrometer manufactured by the Rigaku Corporation of Japan, the PET (polyethylene terephthalate) analyzing crystals are used for analyzing elements such as aluminum and silicon, the LiF1 analyzing crystals are used for analyzing elements such as Ni, Co, Mo and W, and the results are subjected to the normalization processing with the standardless sample analysis software ZSX.

According to the invention, it can be understood that the grading system provided by the invention comprises M hydrogenation catalysts sequentially filled in a material flow direction, and the specific filling mode is not particularly limited therein, the M hydrogenation catalysts may be filled in M hydrogenation catalyst beds, or two or more of the M hydrogenation catalysts may be filled in a hydrogenation catalyst bed, as long as the material flow is sequentially contacted with the M hydrogenation catalysts. The arrangement of the hydrogenation catalyst beds is not particularly limited in the invention, the hydrogenation catalyst beds can be arranged in the same hydrogenation reactor, or arranged in two or more hydrogenation reactors connected in series, as long as the M hydrogenation catalysts are sequentially filled along the material flow direction.

In the present invention, the R value of the hydrogenation catalysts sequentially filled in a material flow direction exhibits a tendency from low to high, i.e., an R value of the Nth catalyst is not less than an R value of the (N-1)th hydrogenation catalyst, wherein the R value exhibits a tendency from low to high means that the R value of the whole system shows the trend from low to high on the whole, but the R value of one or more filled hydrogenation catalysts is allowed to be the same as or similar to the R value of the previous hydrogenation catalyst.

The phrase "the R value of at least one Nth hydrogenation catalyst is greater than the R value of an (N-1)th hydrogenation catalyst" refers to that the R value of at least one hydrogenation catalyst filled in the next (i.e., Nth) in the whole system needs to be larger than the R value of the previously ((N-1)th) filled hydrogenation catalyst.

The invention does not impose specific limitations to the filling of the hydrogenation catalysts and the arrangement of the hydrogenation catalyst beds, those skilled in the art can implement the solutions of the invention by any means, and each of the solutions falls into the protection scope of the grading system provided by the invention.

In the present invention, the numerical range of M is selected from a wide range, that is, the number of hydrogenation catalysts filled in the grading system can be selected from a wide range, when considering both the effect and the economic perspectives, preferably, M is an integer greater than or equal to 3, and may be an integer of 3-10, for example, 3. 4, 5, 6, 7, 8, 9 or 10, preferably an integer of 3-7.

According to a preferred embodiment of the invention, the R value of the Nth hydrogenation catalyst is 1-20 % higher, preferably 2-10% higher than the R value of the (N-1)th hydrogenation catalyst. The preferred embodiment is more conducive to improving the hydrodenitrogenation and aromatic hydrocarbon saturation capacity of the grading system.

According to the grading system provided by the invention, the content of the VIII group metal element in the hydrogenation catalyst characterized by an X-ray photoelectron spectrum in terms of the molar content is preferably within the range of 0.1-6%, and more preferably within the range of 0.5-3%.

According to the grading system provided by the invention, the content of the VIII group metal element in terms of oxides in the hydrogenation catalyst characterized by an X-ray fluorescence spectrum is preferably within the range of 1-15%, and more preferably within the range of 1.5-10%.

According to a preferred embodiment of the invention, the R value of the hydrogenation catalyst is within the range of 3-150%, preferably within the range of 10-50%.

According to a preferred embodiment of the invention, the reduction temperature of the (N-1)th hydrogenation catalyst is not lower than the reduction temperature of the Nth hydrogenation catalyst, the reduction temperature of the hydrogenation catalyst refers to the summit temperature of the reduction peak obtained by H₂-TPR characterization. In this preferred embodiment, among the M hydrogenation catalysts sequentially filled in a material flow direction, the reduction temperatures of the hydrogenation catalysts exhibit a tendency from high to low, wherein "the reduction temperatures exhibit a tendency from high to low" means that the whole system as a whole tends from high to low, but the reduction temperature of one or more hydrogenation catalysts is allowed to be the same as or close to the reduction temperature of the previous hydrogenation catalyst.

Preferably, the reduction temperature of the (N-1)th hydrogenation catalyst is 5-150°C higher, more preferably 10-50°C higher than the reduction temperature of the Nth hydrogenation catalyst bed layer.

In the invention, the reduction temperature of the hydrogenation catalyst is obtained by H₂-TPR characterization. Specifically, the H₂-TPR characterization is performed by using a full-automatic chemical adsorption instrument (AMI-200 type) manufactured by the Altamira Corporation in the United States of America (USA). The carrier gas is high-purity argon gas, 5 vol.% of H₂-Ar is used as the reaction gas, and the temperature rise is programmed to be 700°C with a temperature rise rate of 10°C /min.

Preferably, the reduction temperature of the 1st filled hydrogenation catalyst is within the range of 350-550°C.

The filling amount of each hydrogenation catalyst is not particularly limited in the present invention, those skilled in the art can adaptively match the filling amount based on the above disclosure. Preferably, the adjacent hydrogenation catalysts are filled in a volume ratio of 1:20-20:1, more preferably 1:10-10:1, and further preferably 1:5-5:1.

In the grading system provided by the invention, the support and the active component of each hydrogenation catalyst may be the same or different. The composition of the hydrogenation catalyst is not particularly limited in the invention, any catalyst applicable to the hydrotreating reaction in the art can be applied in the invention. Preferably, each hydrogenation catalyst independently comprises a support, a group VIB metal active component, and a group VIII metal active component.

Preferably, the group VIB metal active component is W and/or Mo, and the group VIII metal active component is Ni and/or Co.

The support may be various inorganic heat-resistant oxides commonly used in the art, preferably, the support is at least one selected from the group consisting of alumina, silica, silica-alumina, magnesia, zirconia, boron oxide, and titania.

In the present invention, the support may further contain a doping element, and for example, the doping element may be one or more of phosphorus, silicon, boron, fluorine, sodium, and other element. The addition amount of the doping element can be a conventional addition amount and preferably accounts for 0.5-6% by mass of the support.

The invention has a wide selection range for the components of each hydrogenation catalyst, the components can be varied and adjusted in a larger range, as long as the trend in the grading system is met. The content of the group VIB metal active component and the group VIII metal active component in each hydrogenation catalyst can be the same or different. Along the material flow direction, the content of the group VIB metal active component and the group VIII metal active component in different hydrogenation catalysts can respectively and independently exhibit the trend from low to high, from high to low, steady or disordered, the content is not particularly limited in the invention. Preferably, the content of the group VIII metal active component and the group VIB metal active component of an Nth hydrogenation catalyst is not less than the content of the group VIII metal active component and the group VIB metal active component of an (N-1)th hydrogenation catalyst.

Preferably, the content of the group VIB metal active component in terms of oxides is 9-50 wt.%, and the content of the group VIII metal active component in terms of oxides is 1-15 wt.%, based on the total weight of the hydrogenation catalyst.

In the grading system provided by the invention, the filled hydrogenation catalyst may be a commercially available commodity, or prepared by using any conventional catalyst conditioning technology. For example, different inorganic or organic promoters can be introduced in the preparation process of the support and the catalyst, the heat treatment temperature of the catalyst can be changed in order to improve the atom distribution of the group VIII metal and control the reduction temperature of the hydrogenation catalyst. Taking the introduction of different inorganic or organic promoters in the preparation process of the support and the catalyst as an example, the inorganic promoters may be one or more of fluorine, silicon, phosphorus, boron, magnesium, and zirconium, and the organic promoters may be one or more of nitrogen-containing organic compounds, sulfur-containing organic compounds and oxygen-containing organic compounds. The inorganic or organic promoters may be introduced at any step, such as at any one step or steps before, simultaneously, and after impregnation of the group VIB and group VIII metal components. The nitrogen-containing organic compound may be an organic compound containing at least one covalently bonded nitrogen atom, such as ethanolamine, diethanolamine, triethanolamine, ethylenediaminetetraacetic acid (EDTA), nitrilotriacetic acid (NTA), and cyclo-ethylenediaminetetraacetic acid. The sulfur-containing organic compound may be an organic compound containing at least one covalently bonded sulfur atom, such as a thiol (represented by general formula R-SH), a thioether (represented by general formula R-S-R), a disulfide (represented by general formula R-S-S-R), and R in the sulfur-containing organic compounds may be an alkyl group having 1 to 10 carbon atoms, such as ethanethiol, ethyl propyl sulfide, dimethyl disulfide. The sulfur-containing organic compound may contain one or more of carboxyl, carbonyl, ester, ether, hydroxyl, mercapto group-containing substituents, such as thioglycolic acid, mercaptopropionic acid, dimercaptopropanol. In addition to the above sulfur-containing organic compounds, the sulfur-containing organic compounds may be sulfone compounds and sulfoxide compounds, such as dimethyl sulfoxide, dimethyl sulfone. An oxygen-containing organic compound is an organic compound containing at least one carbon atom and one oxygen atom. The oxygen-containing moiety can be a carboxyl, carbonyl, hydroxyl moiety, or a combination thereof. The compounds may be acids (e.g., acetic acid, oxalic acid, malonic acid, tartaric acid, malic acid, citric acid), alcohols (e.g., ethylene glycol, propylene glycol, butylene glycol, glycerol, trimethylolethane), ethers (e.g., diethylene glycol, dipropylene glycol, triethylene glycol, tributylene glycol, tetraethylene glycol, polyethylene glycol), saccharides (e.g., glucose, fructose, lactose, maltose, sucrose), or ketones, phenols, aldehydes and lipids.

Differences in the drying and/or calcination heat treatment temperatures also have a significant influence on the concentration of group VIII metal atoms on the surface of the hydrogenation catalyst. Taking Ni as an example, the concentration of nickel atoms on the surface of the hydrogenation catalyst with the same mass content of nickel elements is relatively high if the catalyst is treated at a lower temperature, and the reduction temperature of the obtained hydrogenation catalyst is relatively low; the concentration of nickel atoms on the surface of the hydrogenation catalyst with the same mass content of nickel elements is relatively low if the catalyst is treated at a higher temperature, and the reduction temperature of the obtained hydrogenation catalyst is relatively high. The lower temperature and the higher temperature are relative, the temperature range of the treatment is within the range of 80-700°C, for example, the heat treatment temperature of 80-300°C, preferably 120-200°C can be voluntarily defined as the lower temperature treatment; the heat treatment temperature of 350-800°C, preferably 400-600°C can be voluntarily defined as the higher temperature treatment.

The second aspect of the present invention provides an application of the grading system of hydrogenation catalyst according to the first aspect in an oil product hydrotreatment, preferably an application in an oil product hydrocracking, more preferably an application in an oil product hydrocracking pre-treatment. When the grading system provided by the invention is used for an oil product hydrocracking pretreatment, it can remove impurities (e.g., sulfur, nitrogen, oxygen, and heavy metals) in an oil product to the maximum extent, and can hydrogenate saturated the polycyclic aromatics, improve the properties of the oil product, and desirably perform the function of hydrocracking pretreatment.

The third aspect of the present invention provides a grading method of the hydrogenation catalyst, the method is carried out in a grading system according to the first aspect.

Preferably, the method comprises introducing an oil product to be hydrotreated into the grading system to perform a hydrogenation reaction. Specifically, an oil product to be hydrotreated is introduced into the grading system, it contacts with the first filled hydrogenation catalyst, and then sequentially contacts with the hydrogenation catalysts filled in the grading system for carrying out the reaction.

Preferably, the conditions of the hydrogenation reaction comprise a reaction pressure within a range of 3-20 MPa, a total liquid hourly space velocity within a range of 0.2-4 h⁻¹, and a reaction temperature within a range of 260-430°C; further preferably, the conditions of the hydrogenation reaction comprise: a reaction pressure within a range of 8-17 MPa, a total liquid hourly space velocity within a range of 0.8-2 h⁻¹, and a reaction temperature within a range of 300-400°C.

The grading method provided by the present invention is capable of processing a variety of raw materials including petroleum fractions, coal-based liquefied oils, biomass oils, shale oils, coal tar oils and the like, preferably petroleum fractions including but not limited to at least one selected from the group consisting of diesel, VGO, CGO, and DAO. Its main properties preferably comprise: the initial distillation point is above 180°C, the final distillation point is below 600°C, the density is within the range of 0.8-0.95 g.cm⁻³ (20°C), the nitrogen content is within the range of 100-6000 µg·g⁻¹, the sulfur content is within the range of 0.05-3 wt.%, the total content of aromatics is within the range of 20-80 wt.%.

According to the scheme provided by the present invention, preferably, the hydrogenation reaction comprises at least one of hydrodesulfurization, hydrodenitrogenation, hydrodeoxygenation, and hydrogenation saturation.

According to the method provided by the invention, preferably, the reaction temperature of the Nth hydrogenation catalyst bed is not lower than the reaction temperature of the 1st hydrogenation catalyst bed; more preferably, the reaction temperature of the Nth hydrogenation catalyst bed is not lower than, preferably 5-50°C higher than the reaction temperature of an (N-1)th hydrogenation catalyst bed; such as 5°C, 10°C, 15°C, 20°C, 25°C, 30°C, 35°C, 40°C, 45°C, 50°C, or any range consisting of any two temperatures thereof. The inventors of the present invention have discovered during the research process that the arrangement of a grading system of hydrogenation catalysts with a specific distribution of the VIII group metal elements under the reaction temperature variation trend is more conducive to improving the hydrodenitrogenation and aromatic hydrocarbon hydrogenation saturation performance of the grading system.

In the present invention, the Nth hydrogenation catalyst bed refers to the hydrogenation section formed by the Nth hydrogenation catalyst.

In the industrial plant of the invention, the reaction temperature refers to an average reaction temperature, hydrogenation is an exothermic reaction, the temperature of a hydrogenation catalyst bed gradually rises, and the temperature algebraic sum of each stage of the catalyst is divided by the number of stages, the quotient is denoted as the average reaction temperature. In the case of laboratory evaluation or small-scale equipment, if the reaction temperature is fixed and an isothermal operation is performed, the reaction temperature is the fixed reaction temperature.

Preferably, the reaction temperature of the last hydrogenation catalyst bed is not higher than 410°C, such as within the range of 370-410°C. The adoption of the preferred embodiment is more beneficial to ensuring the stability of the hydrogenation catalysts in the grading system.

The grading system and application provided by the invention will be further described below with reference to the Examples and Comparative Examples, but the Examples are not to be construed as limiting the systems and methods of the present invention.

In the hydrogenation catalysts of the following Examples and Comparative Example, the R value was a ratio of the content of the VIII group metal element in the hydrogenation catalyst characterized by an X-ray photoelectron spectrum to the content of the VIII group metal element in terms of oxides in the hydrogenation catalyst characterized by an X-ray fluorescence spectrum. The X-ray photoelectron spectrum characterization method and the X-ray fluorescence spectrum characterization methods were as described above; the reduction temperature was measured by H₂-TPR, the specific method was as described above.

Unless otherwise specified in the invention, % in the following Examples and Comparative Examples denoted the percentage by mass.

The following preparation examples were provided to illustrate the preparation of the hydrogenation catalysts. The properties of the support used in the following preparation examples were shown in Table 1 below.

**Table 1 Physicochemical properties of the support**

| Items | Alumina support Z |
|---|---|
| Specific surface area, m²/g | 305 |
| Pore volume, mL/g | 0.73 |
| Bulk Density, g/100mL | 55 |
| Saturated liquid absorption, mL/100g | 92 |

### Preparation Example 1

The preparation method of the catalyst A: an alumina support Z was impregnated by incipient wetness method with an impregnating solution containing Mo and Ni, wherein the impregnating solution contained diethylene glycol and citric acid, and the molar ratio of the diethylene glycol to citric acid to nickel atoms was 0.5: 0.5: 1. The impregnated alumina support was subjected to drying at 120°C for 3h and calcined at 540°C for 2h. The obtained catalyst was denoted as the catalyst A.

The preparation method of the catalyst B: an alumina support Z was impregnated by incipient wetness method with an impregnating solution containing Mo and Ni, wherein the impregnating solution contained diethylene glycol and citric acid, and the molar ratio of the diethylene glycol to citric acid to nickel atoms was 0.5: 0.5: 1, the impregnated alumina support was subjected to drying at 120°C for 3h and calcined at 440°C for 2h, the obtained catalyst was denoted as the catalyst B.

The preparation method of the catalyst C: an alumina support Z was impregnated by incipient wetness method with an impregnating solution containing Mo and Ni, wherein the impregnating solution contained diethylene glycol and citric acid, and the molar ratio of the diethylene glycol to citric acid to nickel atoms was 0.5: 0.5: 1, the impregnated alumina support was subjected to drying at 120°C for 3h, the obtained catalyst was denoted as the catalyst C.

The preparation method of the catalyst D: an alumina support Z was impregnated with an impregnating solution containing Mo and Ni by incipient wetness method, wherein the impregnating solution contained diethylene glycol and citric acid, and the molar ratio of the diethylene glycol to citric acid to nickel atoms was 0.5: 0.5: 1, the impregnated alumina support was subjected to drying at 120°C for 3h, the obtained catalyst was denoted as the catalyst D.

The properties of the catalysts prepared in Preparation Example 1 were shown in Table 2 below.

**Table 2 Physicochemical properties of the catalysts**

| Catalyst No. | A | B | C | D |
|---|---|---|---|---|
| MoO₃, wt% | 23.9 | 24.0 | 24.3 | 24.2 |
| NiO, wt% | 4.5 | 4.5 | 4.3 | 5.2 |
| Specific surface area, m²/g | 175 | 173 | 172 | 170 |
| Pore volume, mL/g | 0.41 | 0.41 | 0.41 | 0.40 |
| R, % | 21.3 | 26.2 | 33.5 | 30.9 |
| Reduction temperature, °C | 435 | 403 | 381 | 378 |

### Example 1

The example served to illustrate the grading system and grading method provided by the present invention.

The grading system comprised three hydrogenation catalyst beds arranged along the material flow direction, the volumes of the beds were 30mL, 30mL, and 30mL respectively, and the reaction temperatures were controlled to be 340°C, 360°C and 380°C respectively.

Test No. PS1: the catalyst A, the catalyst B, and the catalyst C were sequentially filled in the three reaction beds along the reaction material flow direction.

Test No. PS2: catalyst A, catalyst A and catalyst C were sequentially filled in the three reaction beds along the reaction material flow direction.

Test No. PS3: catalyst B, catalyst B and catalyst C were sequentially filled in the three reaction beds along the reaction material flow direction.

Test No. PS4: catalyst A, catalyst B and catalyst D were sequentially filled in the three reaction beds along the reaction material flow direction.

### Example 2

The example served to illustrate the grading system and grading method provided by the present invention.

The grading system comprised four hydrogenation catalyst beds arranged in the same fixed bed hydrogenation reactor along the material flow direction; catalyst A, catalyst B, catalyst D, and catalyst C were sequentially filled in the four reaction beds along the reaction material flow direction, the bed volumes were 10mL, 20mL, 30mL and 30mL respectively, and the reaction temperatures were controlled to be 330°C, 345°C, 360°C and 380°C respectively.

### Comparative Example 1

The grading system comprised three hydrogenation catalyst beds arranged in the same fixed bed hydrogenation reactor along the material flow direction; the bed volumes were 30mL, 30mL, and 30mL respectively, and the reaction temperatures were controlled to be 340°C, 360°C and 380°C respectively.

Test No. PD 1: catalyst C, catalyst B, and catalyst A were sequentially filled in the three reaction beds along the reaction material flow direction.

Test No. PD 2: catalyst B, catalyst B and catalyst B were sequentially filled in the three reaction beds along the reaction material flow direction.

Test No. PD 3: catalyst C, catalyst C and catalyst C were sequentially filled in the three reaction beds along the reaction material flow direction.

### Comparative Example 2

The comparative example served to illustrate a method of arranging the conventional metal content from low to high, a scheme of preparing 3 catalysts and grading the catalysts.

The preparation method of the catalyst cat-21: an alumina support Z was impregnated by incipient wetness method with an impregnating solution containing Mo and Ni, the impregnated alumina support was subjected to drying at 120°C for 3h and calcined at 500°C for 2h, the obtain catalyst was denoted as the catalyst cat-21.

The preparation method of the catalyst cat-22: an alumina support Z was impregnated by incipient wetness method with an impregnating solution containing Mo and Ni, the impregnated alumina support was subjected to drying at 120°C for 3h and calcined at 500°C for 2h, the obtain catalyst was denoted as the catalyst cat-22.

The preparation method of the catalyst cat-23: an alumina support Z was impregnated by incipient wetness method with an impregnating solution containing Mo and Ni, the impregnated alumina support was subjected to drying at 120°C for 3h and calcined at 500°C for 2h, the obtain catalyst was denoted as the catalyst cat-23.

The catalysts were graded according to the principle of grading the metal content from low to high, the properties, contents, and filling schemes of the catalysts in use were shown in Table 3.

**Table 3 Grading scheme of the total metal content from low to high**

| Catalyst No. | Cat-21 | Cat-22 | Cat-23 |
|---|---|---|---|
| MoO₃, wt% | 18.4 | 24.0 | 28.2 |
| NiO, wt% | 3.9 | 4.6 | 5.3 |
| Specific surface area, m²/g | 212 | 182 | 169 |
| Pore volume, mL/g | 0.45 | 0.42 | 0.40 |
| R, % | 25.1 | 23.0 | 20.4 |
| Loading position | Upper | Middle | Low |
| Loading amount, mL | 30 | 30 | 30 |

### Comparative Example 3

The grading scheme was performed by gradually increasing the Ni content, and the grading of catalysts was implemented under the circumstance of keeping the Mo content of the catalysts substantially the same; the properties of the catalysts in use and the filling scheme were shown in Table 4.

The preparation method of the catalyst cat-31: an alumina support Z was impregnated by incipient wetness method with an impregnating solution containing Mo and Ni, the impregnated alumina support was subjected to drying at 120°C for 3h and calcined at 550°C for 2h, the obtain catalyst was denoted as the catalyst cat-31.

The preparation method of the catalyst cat-32: an alumina support Z was impregnated by incipient wetness method with an impregnating solution containing Mo and Ni, the impregnated alumina support was subjected to drying at 120°C for 3h and calcined at 550°C for 2h, the obtain catalyst was denoted as the catalyst cat-32.

The preparation method of the catalyst cat-33: an alumina support Z was impregnated by incipient wetness method with an impregnating solution containing Mo and Ni, the impregnated alumina support was subjected to drying at 120°C for 3h and calcined at 550°C for 2h, the obtain catalyst was denoted as the catalyst cat-33.

**Table 4 Grading scheme of the nickel content from low to high**

| Catalyst No. | Cat-31 | Cat-32 | Cat-33 |
|---|---|---|---|
| MoO₃, wt% | 23.5 | 23.8 | 23.3 |
| NiO, wt% | 3.0 | 4.5 | 6.0 |
| Specific surface area, m²/g | 184 | 179 | 164 |
| Pore volume, mL/g | 0.44 | 0.43 | 0.41 |
| R, % | 26.6 | 22.7 | 19.1 |
| Loading position | Upper | Middle | Low |
| Loading amount, mL | 30 | 30 | 30 |

### Application Example

The application example carried out the performance evaluation on the grading system and the grading method provided by the aforementioned Examples and Comparative Examples, the performance evaluation experiments were performed on a small-scale hydrogenation unit, the catalyst was presulfiding before the activity evaluation, and the presulfiding conditions included: the vulcanized oil was straight-run aviation kerosene containing 3 vol% of dimethyl disulfide, the sulfiding pressure was 14.5 MPa, the total liquid hourly space velocity was 2 h⁻¹, and the hydrogen/oil volume ratio was 1,000:1, the temperature was kept constant at 230°C and 370°C for 8 hours respectively.

The evaluation conditions included that the total reaction pressure was 14.5 MPa, the total liquid hourly space velocity was 1 h⁻¹, and the hydrogen/oil volume ratio was 1,000:1. The properties of the feedstock oil used in the performance evaluation experiment were shown in Table 5, and the results of the activity evaluation were shown in Table 6.

The denitrogenation activity in Table 6 was calculated according to the 1-stage reaction, the calculation formula was as follows:

Relative denitrogenation activity = ln (nitrogen content in product/nitrogen content in the feedstock) / ln (nitrogen content in PD1 product/nitrogen content in the feedstock) × 100%. The denitrogenation activity of the PD1 test in the Comparative Example 1 was taken as 100%.

**Table 5 Properties of the feedstock oil**

| Feedstock | VGO |
|---|---|
| Density (20°C), g/cm³ | 0.9153 |
| Sulfur content, wt% | 1.83 |
| Nitrogen content, µg/g | 1136 |
| Distillation range, °C | |
| IBP/EBP | 295/522 |
| The total content of aromatics, wt% | 44.8 |

**Table 6 Evaluation results of catalyst activity after 500 hours**

| Experiment No. | Relative denitrogenation activity,% | The total content of aromatics, % |
|---|---|---|
| Example 1 | | |
| PS1 | 137 | 20.5 |
| PS2 | 127 | 20.8 |
| PS3 | 134 | 20.6 |
| PS4 | 139 | 20.3 |
| Example 2 | 131 | 20.1 |

| Comparative Example 1 | | |
|---|---|---|
| PD1 | 100 | 22.6 |
| PD2 | 104 | 24.5 |
| PD3 | 108 | 20.2 |
| Comparative Example 2 | 95 | 23.5 |
| Comparative Example 3 | 97 | 25.1 |

As can be seen from the evaluation results of the catalyst activity after 500 hours in Table 6, compared with the Comparative Examples, the use of a grading system of hydrogenation catalysts can significantly improve the denitrogenation activity, and the saturation performance of the aromatics is desirable, so that the high-quality feedstock can be provided for the hydrocracking sections.

## Claims

1. A grading system of hydrogenation catalysts, is **characterized in that** the system comprises M hydrogenation catalysts sequentially filled in a material flow direction, wherein M is an integer not less than 2;
wherein an R value of an Nth hydrogenation catalyst is not less than an R value of an (N-1)th hydrogenation catalyst, and the R value of at least one Nth hydrogenation catalyst is greater than the R value of an (N-1)th hydrogenation catalyst, wherein N is an integer not less than 2 and not greater than M;
wherein the R value is a ratio of the molar content of the VIII group metal element in the hydrogenation catalyst **characterized by** an X-ray photoelectron spectrum to the weight content of the VIII group metal element in terms of oxides in the hydrogenation catalyst **characterized by** an X-ray fluorescence spectrum.

2. The grading system according to claim 1, wherein M is an integer not less than 3, preferably an integer of 3-7.

3. The grading system according to claim 1 or 2, wherein the R value of the Nth hydrogenation catalyst is 1-20% higher, preferably 2-10% higher than the R value of the (N-1)th hydrogenation catalyst.

4. The grading system according to any of claims 1-3, wherein the R value of the hydrogenation catalyst is within the range of 3-150%, preferably within the range of 10-50%.

5. The grading system according to any of claims 1-4, wherein the reduction temperature of the (N-1)th hydrogenation catalyst is not lower, preferably 5-150°C higher, more preferably 10-50°C higher than the reduction temperature of the Nth hydrogenation catalyst, the reduction temperature of the hydrogenation catalyst refers to the summit temperature of the reduction peak obtained by H₂-TPR characterization;
preferably, the reduction temperature of the first filled hydrogenation catalyst is within the range of 350-550°C.

6. The grading system according to any of claims 1-5, wherein the adjacent hydrogenation catalysts are filled in a volume ratio of 1:20-20:1, preferably 1:10-10:1, further preferably 1:5-5:1.

7. The grading system according to any one of claims 1-6, wherein each hydrogenation catalyst independently comprises a support, a group VIB metal active component, and a group VIII metal active component;
preferably, the group VIB metal active component is W and/or Mo, and the group VIII metal active component is Ni and/or Co;
preferably, the content of the group VIB metal active component in terms of oxides is 9-50 wt.%, and the content of the group VIII metal active component in terms of oxides is 1-15 wt.%, based on the total weight of the hydrogenation catalyst;
preferably, the support is at least one selected from the group consisting of alumina, silica, silica-alumina, magnesia, zirconia, boron oxide, and titania.

8. An application of the grading system of hydrogenation catalyst according to any one of claims 1-7 in an oil product hydrotreatment, preferably an application in an oil product hydrocracking, more preferably an application in an oil product hydrocracking pre-treatment.

9. A grading method of hydrogenation catalysts, the method is carried out in a grading system according to any one of claims 1-7.

10. The grading method according to claim 9, wherein the method comprises introducing an oil product to be hydrotreated into the grading system to perform a hydrogenation reaction;
preferably, the conditions of the hydrogenation reaction comprise a reaction pressure within a range of 3-20 MPa, a total liquid hourly space velocity within a range of 0.2-4 h⁻¹, and a reaction temperature within a range of 260-430°C;
further preferably, the conditions of the hydrogenation reaction comprise a reaction pressure within a range of 8-17 MPa, a total liquid hourly space velocity within a range of 0.8-2 h⁻¹, and a reaction temperature within a range of 300-400 °C;
preferably, the oil product to be hydrotreated is at least one selected from the group consisting of diesel, VGO, CGO, and DAO;
preferably, the hydrogenation reaction comprises at least one of hydrodesulfurization, hydrodenitrogenation, hydrodeoxygenation, and hydrogenation saturation.

11. The grading method according to claim 9 or 10, wherein the reaction temperature of the Nth hydrogenation catalyst bed is not lower than the reaction temperature of the 1st hydrogenation catalyst bed;
preferably, the reaction temperature of the Nth hydrogenation catalyst bed is not lower than, preferably 5-50°C higher than the reaction temperature of an (N-1)th hydrogenation catalyst bed;
preferably, the reaction temperature of the last hydrogenation catalyst bed is not higher than 410°C.
